(19) Europäisches Patentamt
European Patent Office
Office européen des brevets

(11) **EP 4 207 066 A1**

(12) **EUROPEAN PATENT APPLICATION**
published in accordance with Art. 153(4) EPC

(43) Date of publication:
**05.07.2023 Bulletin 2023/27**

(21) Application number: **21865907.6**

(22) Date of filing: **02.09.2021**

(51) International Patent Classification (IPC):
**G06T 7/246** (2017.01)

(52) Cooperative Patent Classification (CPC):
**G06T 7/246; G06T 7/269; G06T 7/66**

(86) International application number:
**PCT/CN2021/116173**

(87) International publication number:
**WO 2022/052853 (17.03.2022 Gazette 2022/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.09.2020 CN 202010949864**

(71) Applicant: **Huawei Technologies Co., Ltd.**
**Shenzhen, Guangdong 518129 (CN)**

(72) Inventors:
• **WU, Jiajun**
 **Shenzhen, Guangdong 518129 (CN)**
• **LIANG, Zhenbao**
 **Shenzhen, Guangdong 518129 (CN)**

(74) Representative: **Gill Jennings & Every LLP**
**The Broadgate Tower**
**20 Primrose Street**
**London EC2A 2ES (GB)**

(54) **OBJECT TRACKING METHOD AND APPARATUS, DEVICE, AND A COMPUTER-READABLE STORAGE MEDIUM**

(57) This application provides an object tracking method and apparatus, a device, and a computer-readable storage medium that can be used in assisted driving and automated driving. The method includes: detecting an object in a first image, and determining a first feature point set based on an extraction model, where the first feature point set is distributed in a detection region, the detection region includes a first region and a second region other than the first region, and a quantity of feature points of the object in the first region is greater than a quantity of feature points of the object in the second region; determining a second feature point set of the object in a second image based on the first feature point set, where the second image is a next frame of image of the first image; and determining a location region of the object in the second image based on the second feature point set. The method can improve object tracking precision and improve an advanced driver assistant system ADAS capability of a terminal in automated driving or assisted driving, and can be applied to the internet of vehicles, for example, vehicle-to-everything V2X, long term evolution-vehicle LTE-V, or vehicle-to-vehicle V2V

Detect an object in a first image to obtain a detection region of the object and attribute information of the object — 301

Determine an extraction model based on the attribute information of the object — 302

Determine a first feature point set based on the extraction model — 303

Determine a second feature point set of the object in a second image based on the first feature point set — 304

Determine a location region of the object in the second image based on the second feature point set — 305

FIG. 3

EP 4 207 066 A1

## Description

This application claims priority to Chinese Patent Application No. 202010949864.3, filed with the China National Intellectual Property Administration on September 10, 2020 and entitled "OBJECT TRACKING METHOD AND APPARATUS, DEVICE, AND COMPUTER-READABLE STORAGE MEDIUM", which is incorporated herein by reference in its entirety.

## TECHNICAL FIELD

This application relates to the artificial intelligence field, specifically, to the computer vision field, and in particular, to an object tracking method and apparatus, a device, and a computer-readable storage medium.

## BACKGROUND

With development of computer vision theories and technologies, object tracking has become one of hot topics in current computer vision research, and is widely used in fields such as video surveillance, virtual reality, human-computer interaction, and self-driving. An objective of object tracking is to recognize an object of interest from a background of each image and extract information of the object by analyzing a video or image sequence obtained by a sensor, so as to track the object continuously and accurately.

Currently, an optical flow method is one of the most commonly used object tracking algorithms. An optical flow is an instantaneous speed of pixel motion of a moving object on an imaging plane in space. In the optical flow method, object motion information between adjacent frames is calculated by using a change of pixel intensity in an image sequence in time domain and a correlation between the adjacent frames. However, in actual application, during selection of a feature point for object tracking, because a background in a video or an image is complex and changeable, an invalid pixel is also considered as a feature point to some extent, reducing tracking precision.

Therefore, how to effectively improve object tracking precision is an issue that urgently needs to be addressed.

## SUMMARY

This application provides an object tracking method and apparatus, a device, and a computer-readable storage medium, to improve object tracking precision.

According to a first aspect, this application provides an object tracking method. The method may include: detecting an object in a first image to obtain a detection region of the object and attribute information of the object; determining an extraction model based on the attribute information of the object; determining a first feature point set based on the extraction model; determining a second feature point set of the object in a second image based on the first feature point set; and determining a location region of the object in the second image based on the second feature point set, where the first feature point set is distributed in the detection region of the object, the detection region includes a first region and a second region other than the first region, a quantity of feature points of the object in the first region is greater than a quantity of feature points of the object in the second region, and the second image is a next frame of image of the first image.

In the method provided in the first aspect, during selection of a feature point for object tracking, the extraction model is determined based on the attribute information of the object, and a feature point is extracted by using the extraction model, so that a more appropriate and accurate feature point can be extracted. Feature points are distributed in a center region, a region with a clear feature, and an unoccluded region, so that the feature points are distributed more appropriately and accurately, thereby improving object tracking accuracy.

In a possible implementation, the attribute information of the object includes one or more of occlusion information of the object, a heading angle of the object, and category information of the object. In this manner, by using the occlusion information of the object, more feature points extracted by using the extraction model can be distributed in an unoccluded region of the object, to improve appropriateness of distribution of feature points; by using the heading angle of the object, it can be determined that more feature points extracted by using the extraction model are distributed in a region with a clearer feature, to improve accuracy of distribution of feature points; and by using the category information of the object, feature points extracted by using the extraction model can be distributed in a specific region of the object. Further, object tracking precision can be improved.

In a possible implementation, the determining an extraction model based on the attribute information of the object includes: determining a center location of extracted feature points based on the attribute information of the object. In this manner, a parameter of a center location of feature points extracted by using the extraction model is changed to improve appropriateness of distribution of feature points, so as to improve object tracking accuracy. In addition, a feature point is extracted by using the extraction model, and extraction of the feature point is irrelevant to a size of the object or a quantity of pixels of the object, so that operation efficiency of the method can be improved, and the method can be applied to a real-time object tracking scenario, thereby achieving high real-time performance.

In a possible implementation, the occlusion information of the object includes an occlusion proportion of the object and occluded region information of the object. In this case, the determining a center location of extracted feature points based on the attribute information of the object includes: obtaining an initial center location of the extracted feature points; determining, based on a correspondence between an occlusion proportion and an adjustment distance, an adjustment distance corresponding to the occlusion proportion of the object; and determining the center location of the extracted feature points based on the initial center location of the extracted feature points, the adjustment distance corresponding to the occlusion proportion of the object, and an opposite direction of a direction corresponding to the occluded region information. In this manner, the initial center location of the extracted feature points is adjusted to a location closer to a center of an unoccluded part, so that more extracted feature points are distributed in an unoccluded region, thereby helping improve object tracking accuracy.

In a possible implementation, the determining a center location of extracted feature points based on the attribute information of the object includes: obtaining an initial center location of the extracted feature points; determining a feature region of the object based on the heading angle of the object; and determining the center location of the extracted feature points based on the initial center location of the extracted feature points, a preset adjustment distance, and a direction of a center of the feature region. The feature region is a region, other than a background region, that matches preset feature information. In this manner, an orientation of the object may be determined by using the heading angle, and a region with a clear feature of the object may be determined based on the orientation of the object. Further, the center location of the extracted feature points may be adjusted to a location close to a center of the region with a clearer feature of the object, so that the feature point can be distributed in the region with a clear feature of the object, thereby improving object tracking precision.

In a possible implementation, the determining, based on the attribute information of the object, a density of extracted feature points distributed in each region of the detection region of the object includes: determining, based on the attribute information of the object, a density of extracted feature points distributed in each region of the detection region of the object; and determining the extraction model based on the density of extracted feature points distributed in each region of the detection region of the object. In this manner, a model parameter is determined based on the density in each region of the detection region of the object, to determine an extraction model that includes the determined parameter. Therefore, in the determined extraction model, when a total quantity of feature points is fixed, extracted feature points can be more densely distributed in a region in which a center of the object is located, and more dispersedly and sparsely distributed in another region, thereby ensuring an object tracking effect. In addition, a feature point is extracted by using a model, so that operation efficiency and real-time performance are high.

In a possible implementation, the determining, based on the attribute information of the object, a density of extracted feature points distributed in each region of the detection region of the object includes: obtaining an initial density of extracted feature points distributed in each region of the detection region of the object; determining, based on a correspondence between category information and an adjustment parameter, a first adjustment parameter corresponding to the category information of the object; and further determining the density of extracted feature points distributed in each region of the detection region of the object based on the initial density of extracted feature points distributed in each region of the detection region of the object and the first adjustment parameter corresponding to the category information of the object. In this manner, different categories of objects have different distribution of feature points, to meet requirements of objects with different category information; and adjustment parameters determined by using different category information are different, so that different extraction models are obtained, thereby ensuring tracking precision for objects with different category information.

In a possible implementation, a quantity of extracted feature points distributed in each region of the detection region of the object is determined based on the attribute information of the object, and the extraction model is determined based on the quantity of extracted feature points distributed in each region of the detection region of the object. In this manner, when a total quantity of feature points is fixed, a quantity of feature points in each region may be further set based on different categories of objects, to meet tracking requirements of different categories of objects. A feature point is extracted by using a model, so that operation efficiency and real-time performance are high.

In a possible implementation, the determining, based on the attribute information of the object, a quantity of extracted feature points distributed in each region of the detection region of the object includes: obtaining an initial quantity of extracted feature points distributed in each region of the detection region of the object; determining, based on a correspondence between category information and an adjustment parameter, a second adjustment parameter corresponding to the category information of the object; and determining the quantity of extracted feature points distributed in each region of the detection region of the object based on the initial quantity of extracted feature points distributed in each region of the detection region of the object and the second adjustment parameter corresponding to the category information of the object. In this manner, the quantity of feature points in each region of the detection region of the object is determined by using the second adjustment parameter corresponding to the category information, so that the method in this application can adapt to object tracking scenarios with different category information, and have wide applicability. In addition, more feature points can be distributed in a region in which a center of the object is located, and fewer feature points can be distributed in another region, so that feature points are distributed more accurately, and object tracking precision is improved.

In a possible implementation, the determining a second feature point set of the object in a second image based on the feature point set may be performing optical flow estimation twice, that is, forward estimation and backward estimation: performing forward estimation on all feature points in the first feature point set based on a pyramid optical flow algorithm, and determining, in the second image, a feature point corresponding to each feature point in the first feature point set, to obtain a third feature point set; performing backward estimation on all feature points in the third feature point set based on the pyramid optical flow algorithm, and determining, in the first image, a feature point corresponding to each feature point in the third feature point set, to obtain a fourth feature point set; and determining the second feature point set based on the first feature point set, the third feature point set, and the fourth feature point set. In this manner, a feature point with a large optical flow estimation error in the forward estimation is selected by using a feature point set obtained through backward estimation, so that an estimated feature point set with higher accuracy can be obtained, thereby improving object tracking accuracy.

In a possible implementation, the obtaining the second feature point set based on the first feature point set, the third feature point set, and the fourth feature point set includes: determining a distance between each feature point in the first feature point set and a corresponding feature point in the fourth feature point set; and removing, from the third feature point set, a corresponding feature point for which the distance is greater than a preset threshold, to obtain the second feature point set. In this manner, a larger distance indicates a larger optical flow estimation error. Therefore, a feature point with a large error is removed to obtain the second feature point set, so that an error that occurs during forward estimation and backward estimation of a feature point can be reduced, thereby helping improve tracking accuracy.

In a possible implementation, the determining a location region of the object in the second image based on the second feature point set includes: determining, based on a mapping relationship between a distance and a weight, a weight to which a distance corresponding to each feature point in the second feature point set is mapped; and determining the location region of the object in the second image based on the weight to which the distance corresponding to each feature point in the second feature point set is mapped and the detection region of the object in the first image. In this manner, a larger calculated distance between a feature point in the fourth feature point set obtained through backward estimation and a corresponding feature point in the first feature point set in the first image indicates a larger error. Therefore, a larger distance may be set to be mapped to a smaller weight, so that accuracy of determining the location region of the object in the second image can be improved, and an error that occurs during forward estimation and backward estimation can be reduced.

In a possible implementation, the determining the location region of the object in the second image based on the weight corresponding to each feature point in the second feature point set and the detection region of the object in the first image includes: determining a center location of the object in the second image based on a location of each feature point in the second feature point set and a corresponding weight; determining a size and a shape of the detection region; and determining the location region of the object in the second image based on the center location of the object in the second image and the size and the shape of the detection region. In this manner, the center location of the object in the second image is determined through weighted averaging. In addition, it is assumed that sizes and shapes of detection regions of the object in two adjacent frames are the same, and the location region of the object is determined based on the center location of the object in the second image and the size and the shape of the detection region of the object. Therefore, when object tracking is performed on a next frame of image of the second image, the object can be tracked by using a location region with higher precision, so that object tracking accuracy and stability can be continuously optimized.

In a possible implementation, the first image is input to a preset object detection model to obtain a detection result, where the detection result includes the detection region of the object and the attribute information of the object. In this manner, the preset object detection model is used, so that operation efficiency of an entire algorithm can be improved, and a requirement for real-time requirement can be met as far as possible.

According to a second aspect, an embodiment of this application provides an object tracking apparatus. The apparatus may include:

a detection unit, configured to detect an object in a first image to obtain a detection region of the object and attribute information of the object; a first determining unit, configured to determine an extraction model based on the attribute information of the object; a second determining unit, configured to determine a first feature point set based on the extraction model, where the first feature point set is distributed in the detection region of the object, the detection region includes a first region and a second region other than the first region, and a quantity of feature points of the object in the first region is greater than a quantity of feature points of the object in the second region; a third determining unit, configured to determine a second feature point set of the object in a second image based on the first feature point set, where the second image is a next frame of image of the first image; and a fourth determining unit, configured to determine a location region of the object in the second image based on the second feature point set.

In a possible implementation, the attribute information of the object includes one or more of occlusion information of the object, a heading angle of the object, and category information of the object.

In a possible implementation, the first determining unit is specifically configured to: determine a center location of extracted feature points based on the attribute information of the object; and determine the extraction model based on the center location of the extracted feature points.

In a possible implementation, the occlusion information of the object includes an occlusion proportion of the object and occluded region information of the object; and the first determining unit is specifically configured to: obtain an initial center location of the extracted feature points; determine, based on a correspondence between an occlusion proportion and an adjustment distance, an adjustment distance corresponding to the occlusion proportion of the object; and determine the center location of the extracted feature points based on the initial center location of the extracted feature points, the adjustment distance corresponding to the occlusion proportion of the object, and an opposite direction of a direction corresponding to the occluded region information.

In a possible implementation, the first determining unit is specifically configured to: obtain an initial center location of the extracted feature points; determine a feature region of the object based on the heading angle of the object, where the feature region is a region, other than a background region, that matches preset feature information; and determine the center location of the extracted feature points based on the initial center location of the extracted feature points, a preset adjustment distance, and a direction of a center of the feature region.

In a possible implementation, the first determining unit is specifically configured to: determine, based on the attribute information of the object, a density of extracted feature points distributed in each region of the detection region of the object; and determine the extraction model based on the density of extracted feature points distributed in each region of the detection region of the object.

In a possible implementation, the first determining unit is specifically configured to: obtain an initial density of extracted feature points distributed in each region of the detection region of the object; determine, based on a correspondence between category information and an adjustment parameter, a first adjustment parameter corresponding to the category information of the object; and determine the density of extracted feature points distributed in each region of the detection region of the object based on the initial density of extracted feature points distributed in each region of the detection region of the object and the first adjustment parameter corresponding to the category information of the object.

In a possible implementation, the first determining unit is specifically configured to: determine, based on the attribute information of the object, a quantity of extracted feature points distributed in each region of the detection region of the object; and determine the extraction model based on the quantity of extracted feature points distributed in each region of the detection region of the object.

In a possible implementation, the first determining unit is specifically configured to: obtain an initial quantity of extracted feature points distributed in each region of the detection region of the object; determine, based on a correspondence between category information and an adjustment parameter, a second adjustment parameter corresponding to the category information of the object; and determine the quantity of extracted feature points distributed in each region of the detection region of the object based on the initial quantity of extracted feature points distributed in each region of the detection region of the object and the second adjustment parameter corresponding to the category information of the object.

In a possible implementation, the third determining unit is specifically configured to: perform forward estimation on all feature points in the first feature point set based on a pyramid optical flow algorithm, and determine, in the second image, a feature point corresponding to each feature point in the first feature point set, to obtain a third feature point set; perform backward estimation on all feature points in the third feature point set based on the pyramid optical flow algorithm, and determine, in the first image, a feature point corresponding to each feature point in the third feature point set, to obtain a fourth feature point set; and determine the second feature point set based on the first feature point set, the third feature point set, and the fourth feature point set.

In a possible implementation, the third determining unit is specifically configured to: determine a distance between each feature point in the first feature point set and a corresponding feature point in the fourth feature point set; and remove, from the third feature point set, a corresponding feature point for which the distance is greater than a preset threshold, to obtain the second feature point set.

In a possible implementation, the fourth determining unit is specifically configured to: determine, based on a mapping relationship between a distance and a weight, a weight to which a distance corresponding to each feature point in the second feature point set is mapped; and determine the location region of the object in the second image based on the weight to which the distance corresponding to each feature point in the second feature point set is mapped and the detection region of the object in the first image.

In a possible implementation, the fourth determining unit is specifically configured to: determine a center location of the object in the second image based on a location of each feature point in the second feature point set and a corresponding weight; determine a size and a shape of the detection region; and determine the location region of the object in the second image based on the center location of the object in the second image and the size and the shape of the detection region.

In a possible implementation, the detection unit is specifically configured to: input the first image to a preset object detection model to obtain a detection result, where the detection result includes the detection region of the object and the attribute information of the object.

According to a third aspect, an embodiment of this application further provides a computer device. The computer device may include a memory and a processor. The memory is configured to store a computer program that supports the device in performing the foregoing method. The computer program includes program instructions. The processor is configured to invoke the program instructions to perform the method according to any one of the implementations of the first aspect.

According to a fourth aspect, an embodiment of this application further provides a computer-readable storage medium. The computer storage medium stores a computer program. The computer program includes program instructions. When the program instructions are executed by a processor, the processor is enabled to perform the method according to any one of the implementations of the first aspect.

According to a fifth aspect, an embodiment of this application further provides a computer program. The computer program includes computer software instructions. When the computer software instructions are executed by a computer, the computer is enabled to perform any optical flow estimation method according to any one of the implementations of the first aspect or the second aspect.

According to a sixth aspect, this application further provides a chip. The chip is configured to implement the method according to any one of the first aspect or the possible designs of the first aspect.

## BRIEF DESCRIPTION OF DRAWINGS

FIG. 1 is a schematic diagram of a structure of an image pyramid;
FIG. 2 is a schematic diagram of an architecture of an object tracking system according to an embodiment of this application;
FIG. 3 is a schematic flowchart of an object tracking method according to an embodiment of this application;
FIG. 4a is a schematic diagram of an application scenario of an object tracking method according to an embodiment of this application;
FIG. 4b is a schematic diagram of a first image according to an embodiment of this application;
FIG. 5 is a schematic diagram of a two-dimensional Gaussian distribution model according to an embodiment of this application;
FIG. 6a is a schematic diagram of forward estimation and backward estimation according to an embodiment of this application;
FIG. 6b is a schematic diagram of determining a location region according to an embodiment of this application;
FIG. 7a is a schematic diagram of adjusting a center location of feature points based on an expectation according to an embodiment of this application;
FIG. 7b is a schematic diagram of adjusting a center location of feature points based on a heading angle of a vehicle according to an embodiment of this application;
FIG. 8a is a schematic diagram of determining an extraction model based on densities of feature points of an object that are distributed in different regions according to an embodiment of this application;
FIG. 8b is another schematic diagram of determining an extraction model based on densities of feature points of an object that are distributed in different regions according to an embodiment of this application;
FIG. 8c is still another schematic diagram of determining an extraction model based on quantities of feature points in different regions according to an embodiment of this application;
FIG. 8d is yet another schematic diagram of determining an extraction model based on quantities of feature points in different regions according to an embodiment of this application;
FIG. 9 is a schematic diagram of a structure of an object tracking apparatus according to an embodiment of this application; and
FIG. 10 is a schematic diagram of a structure of a computer device according to an embodiment of this application.

## DESCRIPTION OF EMBODIMENTS

The following clearly and completely describes technical solutions in embodiments of this application with reference to accompanying drawings. It is clear that the described embodiments are merely some but not all embodiments of this application.

In the specification and accompanying drawings of this application, the terms "first", "second", and the like are intended to distinguish between different objects or distinguish between different processing of a same object, but do not indicate a particular order of the objects. In addition, the terms "comprise", "include", and any variants thereof in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes other inherent steps or units of the process, the method, the product, or the device. It should be noted that, in embodiments of this application, the terms such as "example" or "for example" are used to represent giving an example, an illustration, or descriptions. Any embodiment or design method described as an "example" or "for example" in embodiments of this application should not be explained as being more preferred or having more advantages than another embodiment or design scheme. Exactly, use of the terms such as "example" or "for example" is intended to present a related concept in a specific manner. In embodiments of this application, "A and/or B" represents two meanings: A and B, and A or B. "A, and/or B, and/or C" represents any one of A, B, and C, or represents any two of A, B, and C, or represents A, B, and C. The following describes technical solutions of this application with reference to accompanying drawings.

First, some terms in this application are described for ease of understanding by a person skilled in the art.

1. Feature point set

The feature point set may also be described as a set of feature points, and is a set of pixels selected from an image for object tracking. A feature point may also represent a grayscale value at a location of a pixel in the image.

In this application, a first feature point set is determined based on an extraction model. For example, if the extraction model is a truncated Gaussian model, the feature point set is a set of a plurality of pixels that are extracted from an image and that meet Gaussian distribution. Each feature point carries a location of an image in which the feature point is located, and a grayscale value of a pixel corresponding to the feature point.

2. Pyramid optical flow algorithm

An optical flow is an instantaneous speed of pixel motion of a moving object on an imaging plane in space, and is a method in which a correspondence between a previous frame of image and a current frame of image is found by using a change of a pixel in an image sequence in time domain and a correlation between adjacent frames of images, to calculate object motion information between adjacent frames of images. Usually, an optical flow is generated due to movement of a foreground object, movement of a camera, or joint movement thereof in a scene. It should be noted that, in the pyramid optical flow algorithm in embodiments of this application, object tracking is implemented by estimating optical flows of an object between two images, and the pyramid optical flow algorithm can be applied to fields such as self-driving, motion detection, action capture and recognition, and augmented reality (augmented reality, AR).

For an optical flow estimation algorithm, an optical flow estimation algorithm used in this application is a Lucas-Kanade (lucas-kanade, LK) optical flow estimation algorithm in which an optical flow equation is constructed based on three basic assumptions. The three basic assumptions are as follows:

(1) Brightness constancy: Pixel brightness of an object in an image remains the same in consecutive frames. That is, a pixel of an image looks the same in different frames. A gray image means that a grayscale value of a pixel does not change with frame tracking.
(2) Spatial consistency: Adjacent pixels have similar motion. That is, adjacent pixels in a current frame should also be adjacent in a next frame.
(3) Short-distance (short-time) motion: A time between adjacent frames is sufficiently short, and object motion is small. That is, a change in time does not cause a sharp change of an object location, and a displacement between adjacent frames is small.

Therefore, an optical flow equation may be constructed, as shown in a formula 1.1:

$$I(x, y, t) = I(x + dx, y + dy, t + dt) \qquad \text{Formula 1.1}$$

$I(x, y, t)$ is a grayscale value of a pixel at a location $(x, y)$ in an image at a moment $t$. $I(x + dx, y + dy, t + dt)$ in the formula 1.1 is expanded at $(x, y, t)$ through first-order Taylor expansion, as shown in a formula 1.2:

$$I(x + dx, y + dy, t + dt) = I(x, y, t) + \frac{\partial I}{\partial x} dx + \frac{\partial I}{\partial y} dy + \frac{\partial I}{\partial t} dt \qquad\qquad \text{Formula 1.2}$$

In this way, a formula 1.3 can be obtained:

$$\frac{\partial I}{\partial x} dx + \frac{\partial I}{\partial y} dy + \frac{\partial I}{\partial t} dt = 0 \Leftrightarrow \frac{\partial I}{\partial x}\frac{dx}{dt} + \frac{\partial I}{\partial y}\frac{dy}{dt} = -\frac{\partial I}{\partial t} \qquad\qquad \text{Formula 1.3}$$

It is assumed that $(\frac{dx}{dt}, \frac{dy}{dt}) = (u, v)$ , where u and v are to-be-solved optical flows of the pixel in an x direction and a y direction. $(\frac{\partial I}{\partial x}, \frac{\partial I}{\partial y})$ is a differential of a pixel grayscale space, and at is a time-grayscale differential of a pixel coordinate point. It is assumed that $(\frac{\partial I}{\partial x}, \frac{\partial I}{\partial y}) = (I_x, I_y)$ and $\frac{\partial I}{\partial t} = I_t$ . In this case, the formula 1.3 may be abbreviated as a matrix form, as shown in a formula 1.4:

$$\begin{bmatrix} I_x & I_y \end{bmatrix} \begin{bmatrix} u \\ v \end{bmatrix} = -I_t \qquad\qquad \text{Formula 1.4}$$

Based on the foregoing assumption of spatial consistency, an optical flow equation may be constructed for a plurality of points around the point. The optical flow equation is abbreviated as a matrix form, as shown in a formula 1.5:

$$\begin{bmatrix} I_{x1} & I_{y1} \\ I_{x2} & I_{y2} \\ I_{x3} & I_{y3} \\ \vdots & \vdots \end{bmatrix} \begin{bmatrix} u \\ v \end{bmatrix} = - \begin{bmatrix} I_{t1} \\ I_{t2} \\ \vdots \end{bmatrix} \Leftrightarrow A\vec{u} = b \qquad\qquad \text{Formula 1.5}$$

The foregoing formula 1.4 includes two unknown numbers (u and v). Therefore, $\vec{u} = (A^T A)^{-1} A^T b$ may be solved by using a linear equation of a plurality of points and least squares, or iterative solution may be performed to obtain u and v.

The optical flow algorithm requires that a time between adjacent frames be sufficiently short and object motion be small. When object motion is large, that is, when an object moves fast, the basic assumptions are not true. As a result, a finally solved value of an optical flow has a large error. Therefore, with reference to an image pyramid, original large motion may be reduced to small motion that meets the basic assumptions for an optical flow, and then optical flow estimation is performed.

The image pyramid is an image set. All images in the set come from a same original image and are obtained through continuous downsampling on the original image. Image downsampling may also be described as downsampling, image down-sampling, down-sampling, or image zoom-out. A size of an image may be reduced through downsampling on the image. For example, it is assumed that a size of a frame of image is M×N. By performing S-time downsampling on the image, the image a may be scaled down by S times, that is, both a length and a width of the image a are reduced by S times. In this case, a size of an image obtained through downsampling is (M/S)×(N/S). When an image size is reduced, object motion can be reduced. Therefore, an optical flow estimation algorithm can be used for a sufficiently small image. It should be noted that the image pyramid is used to process a grayscale image. If a first image and a second image that are obtained are color images, the first image and the second image may be converted into grayscale images, and an image pyramid is constructed based on converted images.

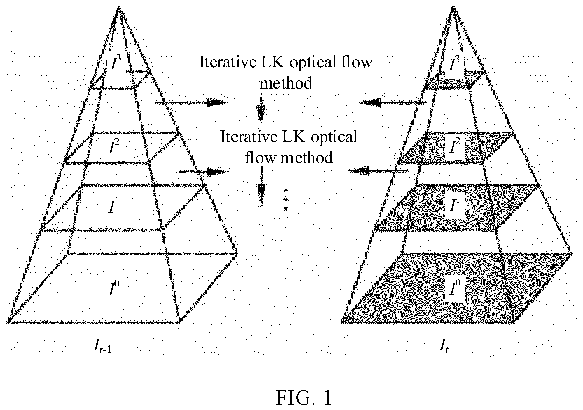

FIG. 1 is a schematic diagram of a structure of an image pyramid. As shown in FIG. 1, there are two image pyramids. An image pyramid on the left is an image pyramid of a first image, an image pyramid on the right is an image pyramid of a second image, and the second image is a next frame of image of the first image. A bottom layer of each of the two image pyramids is an image with an original size, that is, $I^0$ is an image with an original size. Each upper-layer image is obtained by performing 2-time downsampling on a lower-layer image, that is, both a width and a height of the image $I^1$ are half of those of $I^0$. By analogy, an image sequence of $I^0, I^1, I^2, , I^L, ..., I^{n-1}$ may be sequentially obtained. In the image sequence, a relationship between an $L^{th}$-layer image and an upper-layer (($L-1)^{th}$-layer) image may be shown in a formula 1.6:

$$I^L(x,y) = \frac{1}{4}I^{L-1}(2x,2y) + \frac{1}{8}(I^{L-1}(2x-1,2y) + I^{L-1}(2x+1,2y) +$$

$$I^{L-1}(2x,2y-1) + I^{L-1}(2x,2y+1)) + \frac{1}{16}(I^{L-1}(2x-1,2y-1) +$$

$$I^{L-1}(2x+1,2y+1) + I^{L-1}(2x-1,2y+1) + I^{L-1}(2x+1,2y-1)) \qquad \text{Formula 1.6}$$

For a feature point $p(x,y)$ in $I^0$, $p^L(x,y)$ in the $L^{th}$-layer image $I^L$ corresponds to $p$, where $x^L = x/2^L$, and $y^L = y/2^L$. To avoid loss of a large amount of information included in an image, a quantity of layers of an image pyramid usually does not exceed 4. For example, FIG. 1 shows a four-layer image pyramid ($I^0$, $I^1$, $I^2$, and $I^3$).

In the pyramid optical flow algorithm, an initial optical flow at an $L^{th}$ layer is denoted as $g^L = [g_x^L g_y^L]^T$, and an initial optical flow at a top layer $I^{n-1}$ is denoted as $g^{n-1} = [0\ 0]^T$. In this case, calculation of optical flows between two adjacent layers may be shown in a formula 1.7:

$$g^{L-1} = 2(g^L + d^L) \qquad \text{Formula 1.7}$$

$d^L$ is an optical flow increment obtained through calculation on two adjacent frames of images (the first image and the second image) $I_{t-1}$ and $I_t$ at the $L^{th}$ layer by using the optical flow estimation algorithm. By analogy, iteration starts from the top layer to a lower layer until calculation at a bottom layer is performed. In this case, an optical flow at the bottom layer may be shown in a formula 1.8:

$$d = g^0 + d^0 = \sum_{L=0}^{n-1} 2^L d^L \qquad \text{Formula 1.8}$$

The calculated optical flow at the bottom layer is added to a location of a feature point in the first image $I_{t-1}$, to obtain an estimated location of the optical flow in the second image $I_t$.

For ease of understanding embodiments of this application, the following first describes an architecture of an object tracking system on which embodiments of this application are based. The object tracking system may be deployed on any computer device related to object tracking. For example, the object tracking system may be deployed on one or more computing devices (for example, a center server) in a cloud environment, or one or more computing devices (an edge computing device) in an edge environment. The edge computing device may be a server. The cloud environment is a center computing device cluster that is owned by a cloud service provider and that is configured to provide computing, storage, and communication resources. The cloud environment has a large quantity of storage resources and computing resources. The edge environment is an edge computing device cluster that is geographically close to a raw data collection device and that is configured to provide computing, storage, and communication resources. Alternatively, the object tracking system in this application may be deployed on one or more terminal devices. For example, the object tracking system may be deployed on one terminal device. The terminal device has specific computing, storage, and communication resources, and may be a computer, a vehicle-mounted terminal, or the like.

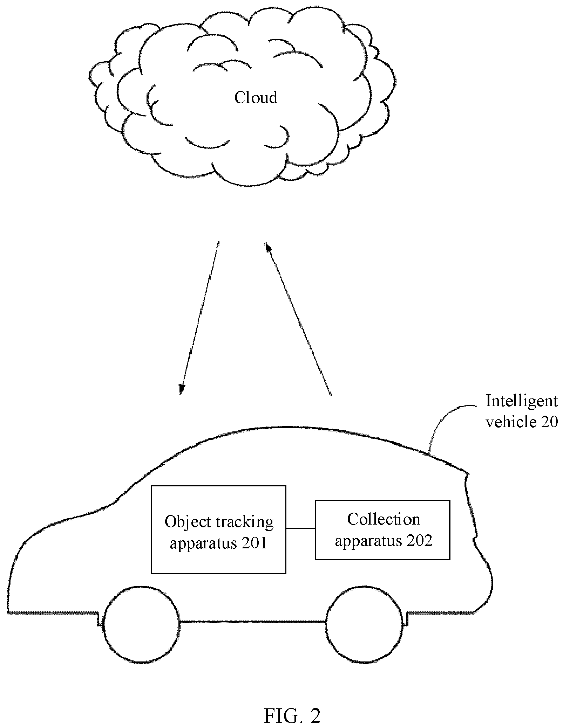

FIG. 2 is a schematic diagram of an architecture of an object tracking system according to an embodiment of this application. As shown in FIG. 2, the object tracking system includes a cloud and an intelligent vehicle 20. An object tracking apparatus 201 and a collection apparatus 202 are deployed on the intelligent vehicle 20. The object tracking apparatus 201 may obtain an image of a traffic road by using the collection apparatus 202, and store the collected image locally or in the cloud. Further, the object tracking apparatus 201 tracks an object like a pedestrian or a vehicle on the traffic road in two adjacent frames of images based on the obtained image of the traffic road, and determines a location region of the object in each frame of image, to obtain an object tracking result of each frame of image. In addition, the object tracking apparatus 201 may further store the object tracking result of each frame of image locally and in the cloud.

The collection apparatus 202 is configured to collect an image of the traffic road from a perspective of the collection apparatus 202. The collection apparatus 202 may include but is not limited to a camera, an infrared camera, a laser radar, and the like.

It may be understood that the architecture of the object tracking system in FIG. 2 is used as an example, and does not constitute a limitation on embodiments of this application.

In an object tracking method provided in embodiments of this application, a location region change of an object between two images may be tracked. The object tracking method described in this application can be applied to many fields such as self-driving, motion detection, action capture and recognition, and augmented reality (augmented reality, AR), to implement a specific function.

For example, an application scenario is a self-driving scenario.

The self-driving scenario means that an intelligent vehicle may implement self-driving by relying on an intelligent pilot that is mainly a computer system in a vehicle. During traveling of the intelligent vehicle, an object tracking apparatus deployed on the intelligent vehicle may obtain, in real time, an image, of a traffic road, that is collected by a collection apparatus. For example, an image of a vehicle traveling in front of the current intelligent vehicle may be obtained. Further, two adjacent frames of images are selected from obtained consecutive images, and an object in the selected images is tracked, to obtain a location region change result of the object between the two images. However, in current object tracking, after two consecutive frames of images are obtained, feature points are selected from a previous frame of image in a uniform distribution manner, and object tracking is performed. However, in the feature points selected in a uniform distribution manner, a feature point in a background region is selected to some extent, resulting in low object tracking precision.

In this case, an object in the previous frame of image may be detected to obtain attribute information of the object, and then a parameter of an extraction model is determined based on the attribute information of the object, to determine the extraction model. In addition, a feature point is extracted from a first image by using the extraction model, so that more feature points are distributed in a region of the object, thereby improving tracking precision during object tracking. Further, the intelligent vehicle may generate a corresponding driving instruction based on an object tracking result.

For example, the object tracking apparatus on the intelligent vehicle may detect, from the first image, an object in front of the intelligent vehicle, for example, a pedestrian, a car, or a bicycle in front of the intelligent vehicle. A center location, a density, a quantity of feature points, and the like of extracted feature points may be determined based on attribute information in a detection result, so that a parameter of an extraction model can be determined based on the center location, the density, and the quantity of feature points, to obtain an extraction model including the specific parameter. In addition, a feature point is extracted by using the extraction model including the specific parameter to perform object tracking, so as to obtain a location region in which the object is located in a second image. Further, the location region in which the object is located in the second image is analyzed and processed, to generate a self-driving instruction, for example, acceleration, deceleration, braking, or turning, so as to ensure that the intelligent vehicle can travel smoothly and safely.

It should be noted that the application scenario described above is used as an example, and does not constitute a limitation on embodiments of this application.

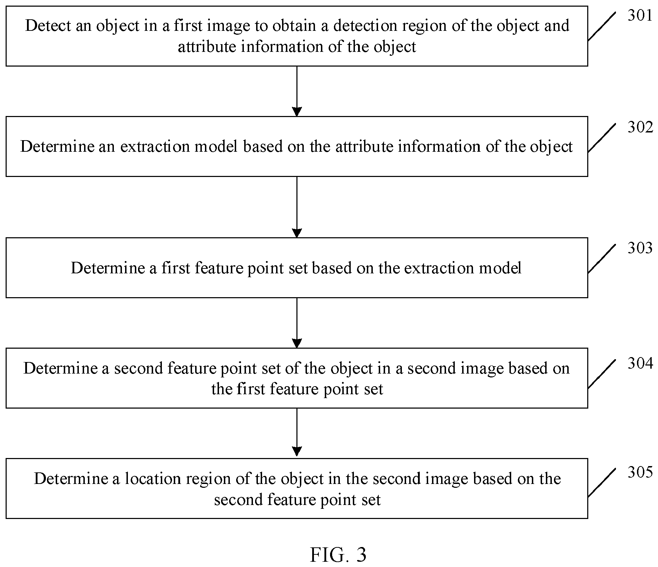

Based on the architecture of the object tracking system provided in FIG. 2 and with reference to the object tracking method provided in this application, technical problems proposed in this application are specifically analyzed and resolved. FIG. 3 is a schematic flowchart of an object tracking method according to an embodiment of this application. The method may include the following step S301 to step S305.

Step S301: An object tracking apparatus detects an object in a first image to obtain a detection region of the object and attribute information of the object.

An object is a visual object in an image. For example, the object may be a vehicle, a person, an animal, or the like in the image. In this embodiment of this application, the object may be a vehicle in the first image, a pedestrian in the first image, or the like.

Specifically, the object tracking apparatus may obtain the first image, where the first image may be a captured image or an image obtained from a cloud; and detect the object in the first image. The detecting the object in the first image is performing detection by using a preset object detection model to obtain a detection result. The preset object detection model may be a region-based convolutional neural network (region-based convolutional neural network, RCNN) model, a single shot multibox detector (single shot multiBox detector, SSD) model, or a you only look once (you only look once, YOLO) model. This is not limited herein. After detection is performed by using the preset detection model, the obtained detection result includes the detection region of the object and the attribute information of the object. The detection region of the object may be a rectangular box including the object in the first image, and the attribute information of the object may include occlusion information of the object, a heading angle of the object, category information of the object, and the like.

Step S302: The object tracking apparatus determines an extraction model based on the attribute information of the object.

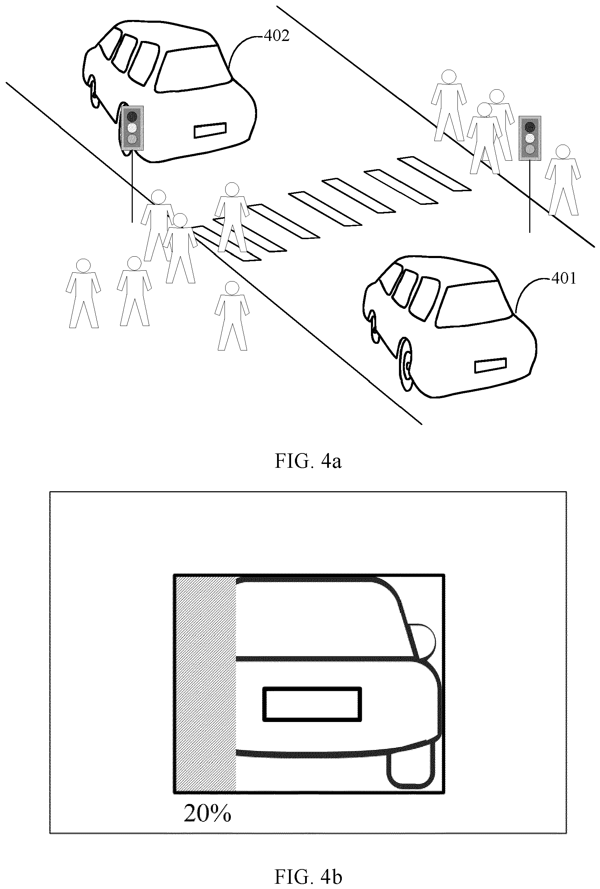

In a possible implementation, the attribute information of the object may include the occlusion information of the object, and the occlusion information of the object includes an occlusion proportion of the object and occluded region information of the object. Further, refer to FIG. 4a. FIG. 4a is a schematic diagram of an application scenario of object tracking according to an embodiment of this application. As shown in FIG. 4a, an object tracking apparatus on an intelligent vehicle 401 may obtain an image, of a traffic road, that is collected by a collection apparatus; and perform detection on the obtained image. For example, the intelligent vehicle 401 may obtain an image of a vehicle 402 traveling in front of the intelligent vehicle 401, and detect the vehicle 402 in the obtained image. Further, refer to FIG. 4b. FIG. 4b is a schematic diagram of a first image according to an embodiment of this application. As shown in FIG. 4b, the first image may include the vehicle 402 traveling in front of the intelligent vehicle 401. Optionally, the first image may further include an occluded region of the vehicle 402 and a detection region of the vehicle 402. For example, in FIG. 4b, a shadow part is an occluded part of the vehicle 402, 20% indicates a detected occlusion proportion of the vehicle 402, and a black rectangular box surrounding the vehicle 402 is the detection region of the vehicle 402.

The object tracking apparatus may store a preset extraction model, and the extraction model may be a Gaussian model, a Weber's model, a triangular model, a Rician model, a Laplacian model, or the like. The extraction model includes a preset initial parameter. The initial parameter may determine an initial center location of extracted feature points, a density of feature points in each region of the detection region of the object, and a quantity of feature points.

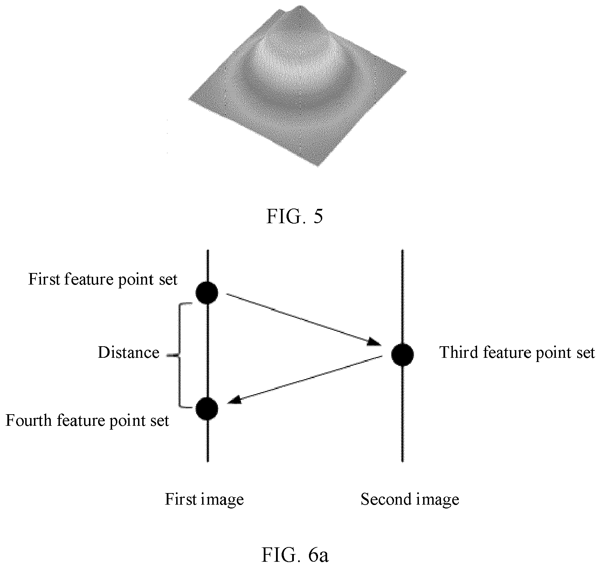

For example, for ease of description, in this application, a one-dimensional Gaussian model is used as an example for description. It should be noted that, during actual use, a two-dimensional Gaussian model is used to extract a feature point. FIG. 5 shows a two-dimensional Gaussian distribution model. A function of the one-dimensional Gaussian model may be shown in a formula 4.1:

$$f(x; \mu, \sigma, a, b) = \frac{\frac{1}{\sigma}\phi(\frac{x-\mu}{\sigma})}{\Phi(\frac{b-\mu}{\sigma}) - \Phi(\frac{a-\mu}{\sigma})} \qquad \text{Formula 4.1}$$

In the formula 4.1, $\Phi(\cdot)$ is a cumulative distribution function of a standard normal distribution, a, b is a range parameter, $\mu$ is an expectation, and $\sigma^2$ is a variance. It should be noted that the range parameter a, b is equivalent to a truncated value of the Gaussian model, and is used to determine that a to-be-extracted feature point is in the detection region of the object.

Two parameters of the extraction model are described below by using the one-dimensional Gaussian distribution as an example.

Parameter 1: an expectation $\mu$

The expectation $\mu$ in the Gaussian model is used to determine a center location of a model. For example, in the one-dimensional Gaussian distribution model, a center of a normal distribution curve is determined by the expectation $\mu$, and the normal distribution curve is symmetric with respect to the expectation $\mu$. Similarly, an expectation in the two-dimensional Gaussian model is also used to determine a center location of a model, namely, a center location of extracted feature points. In this application, the center location of the extracted feature points may be determined by using the occlusion information of the object and the heading angle of the object that are in the attribute information of the object. Further, the center location of the model is determined as the center location of the feature points, to obtain an expectation of the model, so as to obtain an extraction model including the determined expectation.

In a possible implementation, the extraction model includes an initial expectation, namely, the initial center location of the extracted feature points. For example, the initial center location of the extracted feature points may be a center of the detection region of the object. The attribute information of the object includes the occlusion information of the object, and the occlusion information of the object may include the occlusion proportion of the object and the occluded region information of the object. To improve object tracking precision, the center location of the extracted feature points may be adjusted in a direction from the initial center location to an unoccluded region, to obtain a new center location of the extracted feature points, so as to determine an expectation of an extraction model, and obtain an extraction model including the determined expectation. The extraction model including the determined expectation is used, so that more feature points can be distributed in the unoccluded region, thereby improving object tracking precision. For determining the extraction model based on the occlusion information, refer to specific descriptions in Embodiment 1.

In a possible implementation, the attribute information of the object includes the heading angle of the object. The heading angle of the object may be used to indicate an orientation of the object. It may be understood that the object has different feature information in different orientations, and the feature information may be information of a clear feature of the object in the image. For example, when the object is a vehicle, the feature information may be a vehicle front, a vehicle body, and a vehicle rear. If the vehicle front of the vehicle is displayed in the first image, a region of the vehicle front may serve as a feature region. When a part of the vehicle rear and a part of the vehicle body of the vehicle are displayed in the first image, the part of the vehicle body or the part of the vehicle rear that is displayed may serve as a feature region. A region with a clear feature of the object serves as a feature region, so that the center location of the extraction model may be adjusted in a direction from the initial center location to a center of the feature region of the object, to obtain a determined expectation, and obtain an extraction model including the determined expectation. For determining the extraction model based on the heading angle, refer to specific descriptions in Embodiment 2.

Parameter 2: a variance $\sigma^2$

The variance $\sigma^2$ in the Gaussian model is used to determine a shape of a model. For example, in the one-dimensional Gaussian distribution model, a smoothness/sharpness degree of a waveform of a normal distribution curve is determined by a value of the variance $\sigma^2$. A larger value of the variance $\sigma^2$ indicates a smoother normal distribution curve, and a smaller value of the variance $\sigma^2$ indicates a sharper normal distribution curve. Similarly, a variance in the two-dimensional Gaussian model is also used to determine a sharpness or smoothness degree of the model shown in FIG. 5. In this embodiment of this application, the density of extracted feature points distributed in each region and the quantity of extracted feature points may be determined by using a corresponding first adjustment parameter and second adjustment parameter in the attribute information of the object. Further, a variance of an extraction model is determined by using the first adjustment parameter and/or the second adjustment parameter, so that an extraction model including the determined variance can be determined. For determining the extraction model based on densities of feature points distributed in different regions, refer to specific descriptions in Embodiment 3. For determining the extraction model based on quantities of feature points distributed in different regions, refer to specific descriptions in Embodiment 4.

Step S303: The object tracking apparatus determines a first feature point set based on the extraction model, where the first feature point set is distributed in the detection region of the object, the detection region includes a first region and a second region other than the first region, and a quantity of feature points of the object in the first region is greater than a quantity of feature points of the object in the second region.

Specifically, using the Gaussian model as an example, that the object tracking apparatus determines a first feature point set based on the extraction model may be: randomly obtaining coordinates of a pixel from the first image; determining whether the coordinates of the pixel meet a function corresponding to the Gaussian model; and if the coordinates meet the function corresponding to the Gaussian model, determining the pixel as a feature point, and then randomly obtaining coordinates of a pixel and performing determining again; or if the coordinates of the pixel do not meet the function corresponding to the Gaussian model, randomly obtaining coordinates of a pixel again and performing determining, until a quantity of feature points that meet the function corresponding to the Gaussian model is a specified total quantity. Feature points extracted by using the foregoing extraction model that includes a specific expectation and a specific variance are distributed in the first region and the second region of the detection region of the object, and a quantity of feature points of the object in the first region is greater than a quantity of feature points of the object in the second region.

Step S304: The object tracking apparatus determines a second feature point set of the object in a second image based on the first feature point set, where the second image is a next frame of image of the first image.

In a possible implementation, the object tracking apparatus estimates an optical flow of each feature point in the first feature point set. Optical flow estimation includes forward estimation and backward estimation. The forward estimation is to perform estimation on an object in a next frame of image based on a previous frame of image by using the pyramid optical flow algorithm. For example, the first image is a previous frame of image of the second image, and the forward estimation is to estimate a location region, in the second image, of the object in the first image. The backward estimation is to perform estimation on an object in a previous frame of image based on a next frame of image by using the pyramid optical flow algorithm. For example, a location region, in the first image, of an object in the second image is estimated. Further, refer to FIG. 6a. FIG. 6a is a schematic diagram of forward estimation and backward estimation according to an embodiment of this application. As shown in FIG. 6a, a bold line on the left represents the first image, a bold line on the right represents the second image, and the first image is a previous frame of image of the second image. Forward estimation is performed, by using the pyramid optical flow algorithm, on each feature point in the first feature point set extracted from the first image, to obtain a third feature point set of a location, in the second image, that corresponds to each feature point in the first feature point set in the first image. Then backward estimation is performed on each feature point in the third feature point set extracted from the second image, to obtain a fourth feature point set of a location, in the first image, that corresponds to each feature point in the third feature point set in the second image.

Further, to reduce an error caused by the pyramid optical flow algorithm during optical flow estimation, a feature point with a large error may be removed, and the object tracking apparatus may calculate a distance between each feature point in the first feature point set and a corresponding feature point in the fourth feature point set. The calculating a distance may be calculating a distance between two feature points in a calculation manner like a Euclidean distance, a Manhattan distance, or a cosine distance.

The Euclidean distance is used as an example. A feature point A $(x_{i,1}, y_{i,1})$ in the first feature point set corresponds to a feature point B $(x_{i,2}, y_{i,2})$ in the fourth feature point set. In this case, calculation of a distance $d_i$ between the feature point A and the feature point B may be shown in a formula 4.2:

$$d_i = \sqrt{(x_{i,2} - x_{i,1})^2 + (y_{i,2} - y_{i,1})^2} \qquad \text{Formula 4.2}$$

A feature point for which $d_i$ is greater than a preset threshold is removed from the third feature point set, that is, a feature point set in the second image, to obtain the second feature point set. Specifically, the object tracking apparatus may record an index of a feature point for which $d_i$ is greater than the preset threshold, add the index to an index set, and remove, from the third feature point set, a feature point corresponding to the recorded index, to obtain the second feature point set.

It may be understood that, before and after the removal, each feature point in the second feature point set is in a one-to-one correspondence with each feature point in the first feature point set and the fourth feature point set.

Step S305: The object tracking apparatus determines a location region of the object in the second image based on the second feature point set.

In a possible implementation, to reduce an optical flow estimation error, the object tracking apparatus may obtain a mapping relationship between a distance and a weight. It may be understood that a larger calculated distance indicates a larger error. Therefore, a subtraction function may be constructed to calculate a weight, to meet a requirement that a smaller distance indicates a larger weight. In this embodiment of this application, the mapping relationship between a distance and a weight may meet a mapping relationship of a subtraction function shown in a formula 4.3:

$$w_i = \frac{di}{\sum_{i=1}^{N} -log(di/(\sum_{j=1}^{N} dj))} \qquad \text{Formula 4.3}$$

$w_i$ is a weight of an $i^{th}$ feature point, and $d_i$ is a distance of the $i^{th}$ feature point.

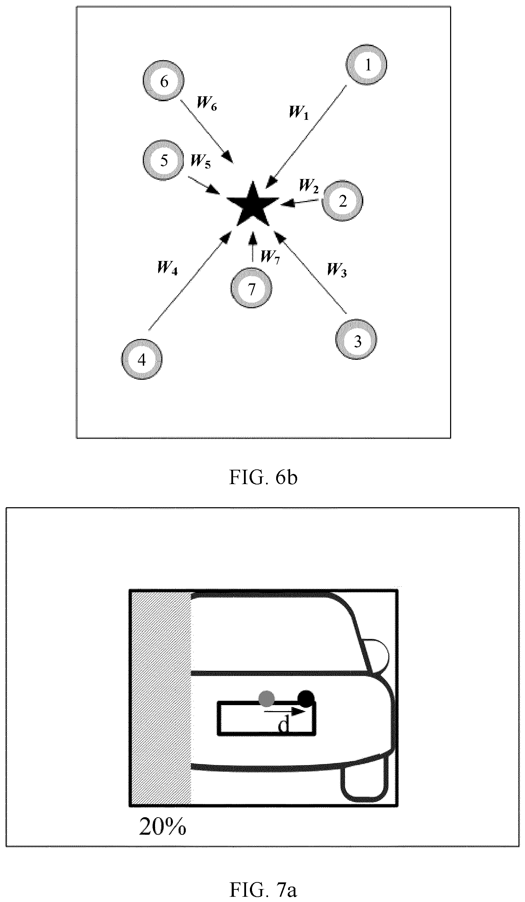

Further, refer to FIG. 6b. FIG. 6b is a schematic diagram of determining a location region according to an embodiment of this application. As shown in FIG. 6b, seven circles represent seven feature points. Each feature point includes coordinates of the feature point and a corresponding weight. A center location of the object in the second image, namely, a location of a five-pointed star in FIG. 6b, is calculated through weighted averaging. Further, the object tracking apparatus determines the location region of the object in the second image based on a size and a shape of the detection region of the object in the first image. The center location of the object in the second image may be determined as a center, and a determined region whose size and shape are the same as the size and the shape of the detection region in the first image may be determined as the location region of the object in the second image.

The following describes Embodiment 1 to Embodiment 4 in detail.

Embodiment 1: The extraction model is determined based on the occlusion information.

As shown in FIG. 4b, the occlusion information may include an occlusion proportion (20%) and occluded region information. The occluded region information may indicate that a left side is occluded, or may indicate that a right side is occluded. It should be noted that, in a scenario provided in this embodiment of this application, the occluded region information may include information in two directions: a left direction and a right direction. As shown in FIG. 4b, a part of a left side of the vehicle is occluded. To distribute more feature points in an unoccluded region of the object, the object tracking apparatus may determine a center of the unoccluded region as a center location of extracted feature points, or may adjust a center location of initial feature points in a direction toward the center of the unoccluded region. Then an expectation of a model is determined based on an adjusted center location of the extracted feature points, to obtain an extraction model including the determined expectation.

Specifically, the object tracking apparatus may determine, based on a correspondence between an occlusion proportion and an adjustment distance, an adjustment distance corresponding to the occlusion proportion of the object; determine, based on an opposite direction corresponding to the occluded region information of the object, an adjustment direction of the center location of the extracted feature points; and then determine, based on the adjustment distance and the adjustment direction, a center location of feature points extracted by using the extraction model. The adjustment distance may be a manually specified value that corresponds to the occlusion proportion, or may be a value of an adjustment distance corresponding to adjustment of the center location of the extracted feature points to a center of a part, in the detection region, in which the object is not occluded.

Further, the occlusion proportion of the object is in a one-to-one correspondence with an expected adjustment value, and the adjustment direction of the center location of the extracted feature points corresponds to an expected adjustment sign. In this case, the object tracking apparatus may determine an expectation based on an initial expectation, the expected adjustment value, and the expected adjustment sign. For example, when the direction corresponding to the occluded region information of the object is a leftward direction, correspondingly, a sign of the expected adjustment value may be a minus sign or a plus sign. When the sign is a minus sign, the expectation is equal to the initial expectation minus the expected adjustment value. On the contrary, when the sign is a plus sign, the expectation is equal to the initial expectation plus the expected adjustment value. Then an extraction model including the determined expectation is obtained.

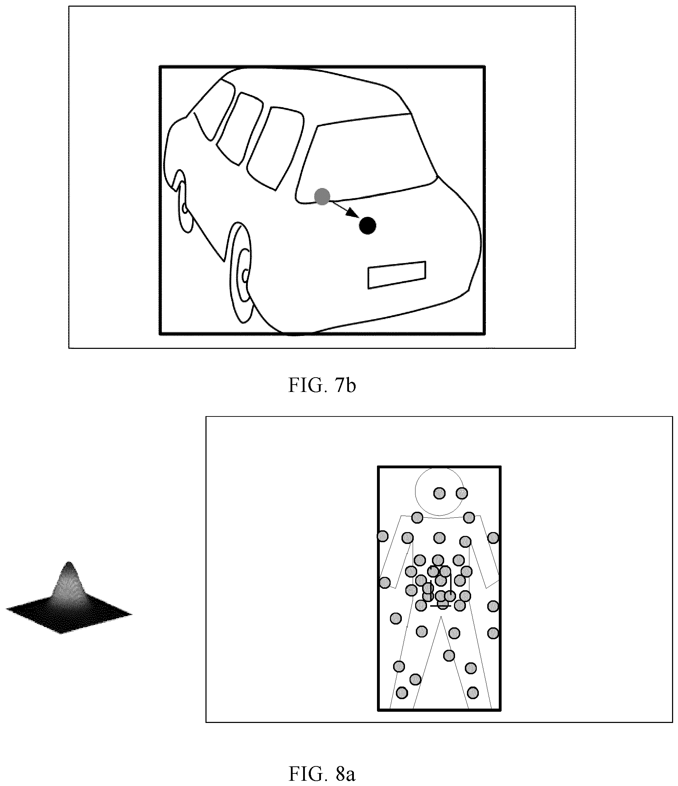

Further, refer to FIG. 7a. FIG. 7a is a schematic diagram of adjusting a center location of feature points based on an expectation according to an embodiment of this application. As shown in FIG. 7a, the object is a vehicle, and the initial center location is a location indicated by a gray circle, namely, a center of the detection region of the object. The adjustment distance, namely, the expected adjustment value, may be determined based on the occlusion proportion 20%. The adjustment distance may be d in FIG. 7a. The adjustment direction is the opposite direction of the direction corresponding to the occluded region information, namely, a rightward direction indicated by an arrow in FIG. 7b, so that an expected adjustment sign is obtained. Therefore, an expected value is obtained, and a center location of the extracted feature points, namely, a location indicated by a black circle, is also obtained. In this way, an extraction model including the determined expectation can be obtained. In the manner in Embodiment 1 of this application, the center location of the feature points extracted by using the extraction model may be adjusted to the unoccluded region, so that the feature points are distributed in the unoccluded region. In this way, the feature points are distributed more accurately, thereby improving object tracking precision.

Embodiment 2: The extraction model is determined based on the heading angle.

The heading angle is an included angle between a motion direction of the object and a horizontal direction of an image. A range of the heading angle is (0°, 360°). When the object is at different heading angles, different feature regions may be displayed in the image. The feature region may be a region including a clear feature of the object, that is, a region, other than a background region in the first image, that matches feature information.

When the object is a vehicle, a feature region of the vehicle may be a region in which a vehicle front is located, a region in which a vehicle side is located, or a region in which a vehicle rear is located. For example, when the object is a vehicle and a heading angle of the vehicle is 0° or 180°, the vehicle side may be a feature region; when the heading angle of the vehicle is within a range of (0°, 180°), the vehicle rear may be a feature region; or when the heading angle of the vehicle is within a range of (180°, 360°), the vehicle front may be a feature region. Optionally, feature information of the object may be determined based on the heading angle, and then the object may be recognized and detected to obtain the feature region. Further, refer to FIG. 7b. FIG. 7b is a schematic diagram of adjusting a center location of feature points based on a heading angle of a vehicle according to an embodiment of this application. As shown in FIG. 7b, the heading angle in the attribute information of the object may be 120°. In this case, a vehicle rear is a clear region of the vehicle, that is, a feature region. Further, the center location of the extracted feature points may be adjusted by a preset distance in a direction from the center of the detection region of the object, namely, a location indicated by a gray circle, to a center of the feature region, namely, a location indicated by a black circle in FIG. 7b.

An expected adjustment value may be determined based on a preset adjustment distance, and an expected adjustment sign may be determined based on an adjustment direction of the center of the extracted feature points. When the sign is a minus sign, an expectation is equal to an initial expectation minus the expected adjustment value. On the contrary, when the sign is a plus sign, an expectation is equal to an initial expectation plus the expected adjustment value. Further, an extraction model including the determined expectation is obtained. In the manner in Embodiment 2 of this application, the center location of the feature points extracted by using the extraction model may be adjusted to a region with a clearer feature of the object. In this way, the feature points are distributed more properly, thereby improving object tracking accuracy.

Embodiment 3: The extraction model is determined based on densities of feature points distributed in different regions.

After performing detection on the first image, the object tracking apparatus obtains the category information of the object. For example, the category information may include a category of the object, for example, a vehicle, a pedestrian, or a bicycle. The category information of the object corresponds to a first adjustment parameter, and the first adjustment parameter may be used to determine a density of extracted feature points distributed in each region of the detection region of the object. In addition, an initial variance may be adjusted based on a value of the first adjustment parameter, to obtain a variance of an extraction model. It should be noted that adjusting a variance of a Gaussian model by using the first adjustment parameter may be modifying an original variance to the first adjustment parameter, or may be adjusting the variance of the Gaussian model based on the first adjustment parameter, to obtain a variance of an extraction model.

The detection region of the object may include a first region and a second region. The first region may be a region that uses a center of the detection region of the object as a center and whose length and width are 10% or 20% of a length and a width of a rectangular box of the detection region. The second region is a region other than the first region in the detection region of the object.

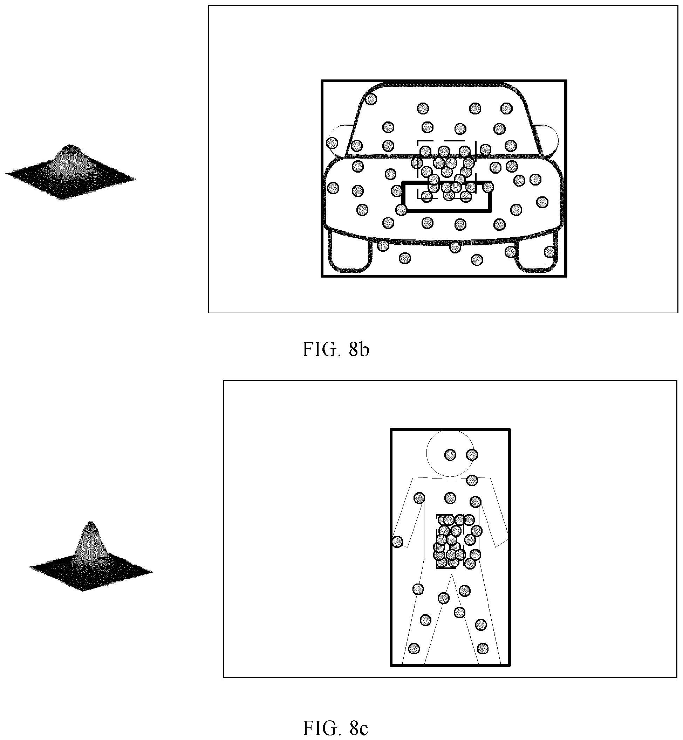

For example, refer to both FIG. 8a and FIG. 8b. FIG. 8a and FIG. 8b are schematic diagrams of determining an extraction model based on densities of feature points of an object that are distributed in different regions according to an embodiment of this application. When the category information of the object is a pedestrian, the object tracking apparatus determines a first adjustment parameter corresponding to the pedestrian, and therefore may determine a variance in the Gaussian model by using the first adjustment parameter, to obtain an extraction model including the determined variance, for example, a Gaussian model shown on the left of FIG. 8a. A density of feature points that are extracted by using the Gaussian model shown on the left of FIG. 8a and that are distributed in a first region and a second region of a detection region of the pedestrian may be shown on the right of FIG. 8a.

When the category information of the object is a vehicle, the object tracking apparatus determines a variance in the Gaussian model by using a first adjustment parameter corresponding to the vehicle, and then obtains an extraction model including the determined variance, for example, a Gaussian model shown on the left of FIG. 8b. A density of feature points in a first region and a second region of a detection region of the vehicle is extracted by using the Gaussian model shown on the left of FIG. 8b, to obtain feature points indicated by gray circles on the right of FIG. 8b. A dashed-line rectangular box indicates the first region, and the second region is a region other than the first region in the detection region of the object, for example, a region around the first region shown in FIG. 8b. It can be learned that a density of feature points in the first region is greater than a density of feature points in the second region. In the manner in Embodiment 3 of this application, the feature points extracted by using the extraction model can be more densely distributed in a center region, and more dispersedly and sparsely distributed in a surrounding region. Therefore, more feature points are distributed in the center region of the object, and a quantity of feature points distributed in a background region and a region other than the center of the object is reduced, thereby improving object tracking accuracy.

Embodiment 4: The extraction model is determined based on quantities of feature points distributed in different regions.

The one-dimensional Gaussian model is used as an example. The range parameter a, b in the formula 4.1 is a truncation parameter of the Gaussian model, and is used to limit all feature points within the detection region of the object. Similarly, two range parameters may be further added to limit a quantity of feature points in a first region and a quantity of feature points in a second region in the detection region of the object. The first region may be a region that uses a center of the detection region of the object as a center and whose length and width are 10% or 20% of a length and a width of a rectangular box of the detection region. The second region is a region other than the first region in the object detection region. The quantity of feature points in the first region is limited by using the two added range parameters, so that the quantity of feature points in the second region can be limited based on a total quantity of feature points and the quantity of feature points in the first region. When the range parameter is determined, the quantity of feature points distributed in the first region and the quantity of feature points distributed the second region in the detection region of the object is adjusted by adjusting a variance of the Gaussian model.

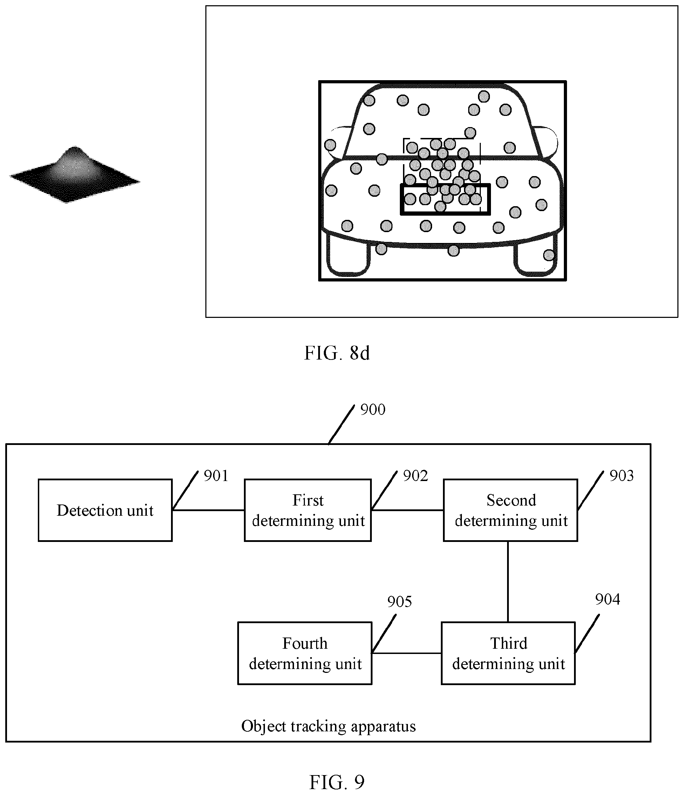

For example, refer to both FIG. 8c and FIG. 8d. FIG. 8c and FIG. 8d are schematic diagrams of determining an extraction model based on quantities of feature points in different regions according to an embodiment of this application. When the category information of the object is a pedestrian, a second adjustment parameter corresponding to the pedestrian is determined. In this case, a variance in the Gaussian model may be determined by using the second adjustment parameter, to obtain an extraction model including the determined variance, for example, a Gaussian model shown on the left of FIG. 8c. A quantity of extracted feature points distributed in a first region and a second region of a detection region of the pedestrian may be shown on the right of FIG. 8c. A dashed-line box in FIG. 8c indicates the first region, and gray circles indicate feature points. When the category information of the object is a vehicle, the object tracking apparatus determines a first adjustment parameter corresponding to the vehicle, determines a variance in the Gaussian model, and then obtains an extraction model including the determined variance, for example, a Gaussian model shown on the left of FIG. 8d. Feature points in a first region and a second region of a detection region of the vehicle are executed by using the Gaussian model shown on the left of FIG. 8d, to obtain feature points indicated by gray circles on the right of FIG. 8d. The dashed-line rectangular box indicates the first region, and the second region is a region around the first region.

It should be noted that adjusting the variance of the Gaussian model by using the second adjustment parameter may be modifying an original variance to the second adjustment parameter, or may be adjusting the variance of the Gaussian model based on the second adjustment parameter. In the manner in Embodiment 4 of this application, more feature points extracted by using the extraction model can be distributed in a center region of the object, and a quantity of feature points distributed in a surrounding region and a background region of the object is reduced. Therefore, utilization of feature points is improved, and object tracking accuracy is also improved.

The foregoing describes the method in embodiments of this application in detail, and the following provides a related apparatus in embodiments of this application.

FIG. 9 is a schematic diagram of a structure of an object tracking apparatus according to an embodiment of this application. The object tracking apparatus 90 may include a detection unit 901, a first determining unit 902, a second determining unit 903, a third determining unit 904, and a fourth determining unit 905. Detailed descriptions of the units are as follows:

The detection unit 901 is configured to detect an object in a first image to obtain a detection region of the object and attribute information of the object. The first determining unit 902 is configured to determine an extraction model based on the attribute information of the object. The second determining unit 903 is configured to determine a first feature point set based on the extraction model, where the first feature point set is distributed in the detection region of the object, the detection region includes a first region and a second region other than the first region, and a quantity of feature points of the object in the first region is greater than a quantity of feature points of the object in the second region. The third determining unit 904 is configured to determine a second feature point set of the object in a second image based on the first feature point set, where the second image is a next frame of image of the first image. The fourth determining unit 905 is configured to determine a location region of the object in the second image based on the second feature point set.

In a possible implementation, the attribute information of the object includes one or more of occlusion information of the object, a heading angle of the object, and category information of the object.

In a possible implementation, the first determining unit 902 is specifically configured to: determine a center location of extracted feature points based on the attribute information of the object; and determine the extraction model based on the center location of the extracted feature points.

In a possible implementation, the occlusion information of the object includes an occlusion proportion of the object and occluded region information of the object; and the first determining unit 902 is specifically configured to: obtain an initial center location of the extracted feature points; determine, based on a correspondence between an occlusion proportion and an adjustment distance, an adjustment distance corresponding to the occlusion proportion of the object; and determine the center location of the extracted feature points based on the initial center location of the extracted feature points, the adjustment distance corresponding to the occlusion proportion of the object, and an opposite direction of a direction corresponding to the occluded region information.

In a possible implementation, the first determining unit 902 is specifically configured to: obtain an initial center location of the extracted feature points; determine a feature region of the object based on the heading angle of the object, where the feature region is a region, other than a background region, that matches preset feature information; and determine the center location of the extracted feature points based on the initial center location of the extracted feature points, a preset adjustment distance, and a direction of a center of the feature region.

In a possible implementation, the first determining unit 902 is specifically configured to: determine, based on the attribute information of the object, a density of extracted feature points distributed in each region of the detection region of the object; and determine the extraction model based on the density of extracted feature points distributed in each region of the detection region of the object.

In a possible implementation, the first determining unit 902 is specifically configured to: obtain an initial density of extracted feature points distributed in each region of the detection region of the object; determine, based on a correspondence between category information and an adjustment parameter, a first adjustment parameter corresponding to the category information of the object; and determine the density of extracted feature points distributed in each region of the detection region of the object based on the initial density of extracted feature points distributed in each region of the detection region of the object and the first adjustment parameter corresponding to the category information of the object.

In a possible implementation, the first determining unit 902 is specifically configured to: determine, based on the attribute information of the object, a quantity of extracted feature points distributed in each region of the detection region of the object; and determine the extraction model based on the quantity of extracted feature points distributed in each region of the detection region of the object.

In a possible implementation, the first determining unit 902 is specifically configured to: obtain an initial quantity of extracted feature points distributed in each region of the detection region of the object; determine, based on a correspondence between category information and an adjustment parameter, a second adjustment parameter corresponding to the category information of the object; and determine the quantity of extracted feature points distributed in each region of the detection region of the object based on the initial quantity of extracted feature points distributed in each region of the detection region of the object and the second adjustment parameter corresponding to the category information of the object.

In a possible implementation, the third determining unit 904 is specifically configured to: perform forward estimation on all feature points in the first feature point set based on a pyramid optical flow algorithm, and determine, in the second image, a feature point corresponding to each feature point in the first feature point set, to obtain a third feature point set; perform backward estimation on all feature points in the third feature point set based on the pyramid optical flow algorithm, and determine, in the first image, a feature point corresponding to each feature point in the third feature point set, to obtain a fourth feature point set; and determine the second feature point set based on the first feature point set, the third feature point set, and the fourth feature point set.

In a possible implementation, the third determining unit 904 is specifically configured to: determine a distance between each feature point in the first feature point set and a corresponding feature point in the fourth feature point set; and remove, from the third feature point set, a corresponding feature point for which the distance is greater than a preset threshold, to obtain the second feature point set.

In a possible implementation, the fourth determining unit 905 is specifically configured to: determine, based on a mapping relationship between a distance and a weight, a weight to which a distance corresponding to each feature point in the second feature point set is mapped; and determine the location region of the object in the second image based on the weight to which the distance corresponding to each feature point in the second feature point set is mapped and the detection region of the object in the first image.

In a possible implementation, the fourth determining unit 905 is specifically configured to: determine a center location of the object in the second image based on a location of each feature point in the second feature point set and a corresponding weight; determine a size and a shape of the detection region; and determine the location region of the object in the second image based on the center location of the object in the second image and the size and the shape of the detection region.

In a possible implementation, the detection unit 901 is specifically configured to: input the first image to a preset object detection model to obtain a detection result, where the detection result includes the detection region of the object and the attribute information of the object.

It should be noted that, for functions of the functional units in the object tracking apparatus 900 described in this embodiment of this application, reference may be made to related descriptions of step S301 to step S305 in the foregoing method embodiment in FIG. 3. Details are not described herein again.

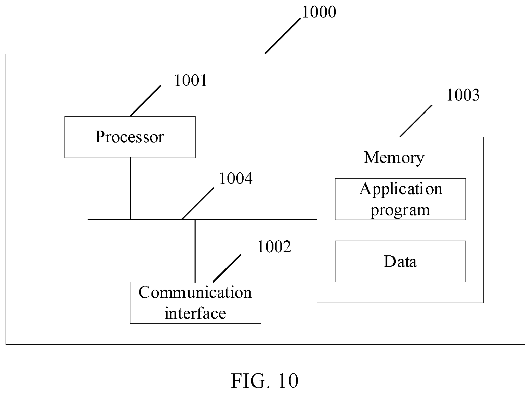

FIG. 10 is a schematic diagram of a structure of a computer device according to an embodiment of this application. As shown in FIG. 10, the computer device 1000 includes a processor 1001, a communication interface 1002, and a memory 1003. The processor 1001, the communication interface 1002, and the memory 1003 are connected to each other through an internal bus 1004.

The processor 1001 may include one or more general-purpose processors, for example, a central processing unit (central processing unit, CPU), or a combination of a CPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The bus 1004 may be a peripheral component interconnect (peripheral component interconnect, PCI) bus, an extended industry standard architecture (extended industry standard architecture, EISA) bus, or the like. The bus 1004 may be categorized as an address bus, a data bus, a control bus, or the like. For ease of representation, only one bold line is used to represent the bus in FIG. 10, but this does not mean that there is only one bus or only one type of bus.

The memory 1003 may include a volatile memory (volatile memory) like a random access memory (random access memory, RAM); or the memory 1003 may include a non-volatile memory (non-volatile memory) like a read-only memory (read-only memory, ROM), a flash memory (flash memory), a hard disk drive (hard disk drive, HDD), or a solid-state drive (solid-state drive, SSD); or the memory 1003 may include a combination of the foregoing types. The program code may be used to implement method steps performed by a computing device in the object tracking method embodiment shown in FIG. 3.

It should be noted that, for functions of the functional units of the computer device 1000 described in this embodiment of this application, reference may be made to related descriptions of step S301 to step S305 in the foregoing method embodiment in FIG. 3. Details are not described herein again.

An embodiment of this application further provides a computer-readable storage medium. The computer-readable storage medium stores a computer program. When the program is executed by a processor, some or all of the steps recorded in any one of the foregoing method embodiments can be implemented, and functions of any functional module described in FIG. 9 can be implemented.

An embodiment of this application further provides a computer program product. When the computer program product runs on a computer or a processor, the computer or the processor is enabled to perform one or more steps in any one of the foregoing methods. When the foregoing modules in the device are implemented in a form of a software functional unit and sold or used as an independent product, the modules may be stored in the computer-readable storage medium.

In the foregoing embodiments, the descriptions in the embodiments have respective focuses. For a part that is not described in detail in an embodiment, refer to related descriptions in other embodiments.

It should be understood that the "first", "second", "third", "fourth", and various numbers in this specification are merely used for differentiation for ease of description, and are not intended to limit the scope of this application.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be further understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with examples described in embodiments disclosed in this specification, units and algorithm steps can be implemented by electronic hardware or a combination of computer software and electronic hardware. Whether the functions are performed by hardware or software depends on particular applications and design constraints of technical solutions. A person skilled in the art may use different methods to implement the described functions for each particular application, but it should not be considered that the implementation goes beyond the scope of this application.

It may be clearly understood by a person skilled in the art that, for convenience and brevity of description, for a detailed working process of the foregoing system, apparatus, and unit, reference may be made to a corresponding process in the foregoing method embodiments. Details are not described herein again.

In several embodiments provided in this application, it should be understood that the disclosed system, apparatus, and method may be implemented in another manner. For example, the described apparatus embodiments are merely examples. For example, division into the units is merely logical function division and may be other division in actual implementation. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts shown as units may or may not be physical units, may be located in one place, or may be distributed on a plurality of network units. Some or all of the units may be selected according to an actual requirement to achieve objectives of solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, technical solutions of this application essentially, or the part contributing to the conventional technology, or some of technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, for example, a USB flash drive, a removable hard disk, a read-only memory (read-only memory, ROM), a random access memory (random access memory, RAM), a magnetic disk, or an optical disc.

A sequence of the steps of the method in embodiments of this application may be adjusted, combined, or removed according to an actual requirement.

The modules in the apparatus in embodiments of this application may be combined, divided, and deleted according to an actual requirement.

In conclusion, the foregoing embodiments are merely intended for describing technical solutions of this application, but not for limiting this application. Although this application is described in detail with reference to the foregoing embodiments, a person of ordinary skill in the art should understand that modifications to the technical solutions recorded in the foregoing embodiments or equivalent replacements to some technical features thereof may still be made, without departing from the scope of the technical solutions of embodiments of this application.

**Claims**

1. An object tracking method, comprising:

    detecting an object in a first image to obtain a detection region of the object and attribute information of the object;
    determining an extraction model based on the attribute information of the object;
    determining a first feature point set based on the extraction model, wherein the first feature point set is distributed in the detection region of the object, the detection region comprises a first region and a second region other than the first region, and a quantity of feature points of the object in the first region is greater than a quantity of feature points of the object in the second region;
    determining a second feature point set of the object in a second image based on the first feature point set, wherein the second image is a next frame of image of the first image; and
    determining a location region of the object in the second image based on the second feature point set.

2. The method according to claim 1, wherein the attribute information of the object comprises one or more of occlusion information of the object, a heading angle of the object, and category information of the object.

3. The method according to claim 1 or 2, wherein the determining an extraction model based on the attribute information of the object comprises:

determining a center location of extracted feature points based on the attribute information of the object; and determining the extraction model based on the center location of the extracted feature points.

4. The method according to claim 3, wherein the occlusion information of the object comprises an occlusion proportion of the object and occluded region information of the object; and
the determining a center location of extracted feature points based on the attribute information of the object comprises:

    obtaining an initial center location of the extracted feature points;
    determining, based on a correspondence between an occlusion proportion and an adjustment distance, an adjustment distance corresponding to the occlusion proportion of the object; and
    determining the center location of the extracted feature points based on the initial center location of the extracted feature points, the adjustment distance corresponding to the occlusion proportion of the object, and an opposite direction of a direction corresponding to the occluded region information.

5. The method according to claim 3, wherein the determining a center location of extracted feature points based on the attribute information of the object comprises:

    obtaining an initial center location of the extracted feature points;
    determining a feature region of the object based on the heading angle of the object, wherein the feature region is a region, other than a background region, that matches preset feature information; and
    determining the center location of the extracted feature points based on the initial center location of the extracted feature points, a preset adjustment distance, and a direction of a center of the feature region.

6. The method according to claim 1 or 2, wherein the determining an extraction model based on the attribute information of the object comprises:

    determining, based on the attribute information of the object, a density of extracted feature points distributed in each region of the detection region of the object; and
    determining the extraction model based on the density of extracted feature points distributed in each region of the detection region of the object.

7. The method according to claim 6, wherein the determining, based on the attribute information of the object, a density of extracted feature points distributed in each region of the detection region of the object comprises:

    obtaining an initial density of extracted feature points distributed in each region of the detection region of the object;
    determining, based on a correspondence between category information and an adjustment parameter, a first adjustment parameter corresponding to the category information of the object; and
    determining the density of extracted feature points distributed in each region of the detection region of the object based on the initial density of extracted feature points distributed in each region of the detection region of the object and the first adjustment parameter corresponding to the category information of the object.

8. The method according to claim 1 or 2, wherein the determining an extraction model based on the attribute information of the object comprises:

    determining, based on the attribute information of the object, a quantity of extracted feature points distributed in each region of the detection region of the object; and
    determining the extraction model based on the quantity of extracted feature points distributed in each region of the detection region of the object.

9. The method according to claim 8, wherein the determining, based on the attribute information of the object, a quantity of extracted feature points distributed in each region of the detection region of the object comprises:

    obtaining an initial quantity of extracted feature points distributed in each region of the detection region of the object;
    determining, based on a correspondence between category information and an adjustment parameter, a second adjustment parameter corresponding to the category information of the object; and
    determining the quantity of extracted feature points distributed in each region of the detection region of the object based on the initial quantity of extracted feature points distributed in each region of the detection region of the object and the second adjustment parameter corresponding to the category information of the object.

10. The method according to any one of claims 1 to 9, wherein the determining a second feature point set of the object in a second image based on the feature point set comprises:

performing forward estimation on all feature points in the first feature point set based on a pyramid optical flow algorithm, and determining, in the second image, a feature point corresponding to each feature point in the first feature point set, to obtain a third feature point set;
performing backward estimation on all feature points in the third feature point set based on the pyramid optical flow algorithm, and determining, in the first image, a feature point corresponding to each feature point in the third feature point set, to obtain a fourth feature point set; and
determining the second feature point set based on the first feature point set, the third feature point set, and the fourth feature point set.

11. The method according to claim 10, wherein the obtaining the second feature point set based on the first feature point set, the third feature point set, and the fourth feature point set comprises:

determining a distance between each feature point in the first feature point set and a corresponding feature point in the fourth feature point set; and
removing, from the third feature point set, a corresponding feature point for which the distance is greater than a preset threshold, to obtain the second feature point set.

12. The method according to claim 11, wherein the determining a location region of the object in the second image based on the second feature point set comprises:

determining, based on a mapping relationship between a distance and a weight, a weight to which a distance corresponding to each feature point in the second feature point set is mapped; and
determining the location region of the object in the second image based on the weight to which the distance corresponding to each feature point in the second feature point set is mapped and the detection region of the object in the first image.

13. The method according to claim 12, wherein the determining the location region of the object in the second image based on the weight corresponding to each feature point in the second feature point set and the detection region of the object in the first image comprises:

determining a center location of the object in the second image based on a location of each feature point in the second feature point set and a corresponding weight;
determining a size and a shape of the detection region; and
determining the location region of the object in the second image based on the center location of the object in the second image and the size and the shape of the detection region.

14. The method according to any one of claims 1 to 13, wherein the detecting an object in a first image to obtain a detection region of the object and attribute information of the object comprises:
inputting the first image to a preset object detection model to obtain a detection result, wherein the detection result comprises the detection region of the object and the attribute information of the object.

15. An object tracking apparatus, comprising:

a detection unit, configured to detect an object in a first image to obtain a detection region of the object and attribute information of the object;
a first determining unit, configured to determine an extraction model based on the attribute information of the object;
a second determining unit, configured to determine a first feature point set based on the extraction model, wherein the first feature point set is distributed in the detection region of the object, the detection region comprises a first region and a second region other than the first region, and a quantity of feature points of the object in the first region is greater than a quantity of feature points of the obj ect in the second region;
a third determining unit, configured to determine a second feature point set of the object in a second image based on the first feature point set, wherein the second image is a next frame of image of the first image; and a fourth determining unit, configured to determine a location region of the object in the second image based on the second feature point set.

**16.** The apparatus according to claim 15, wherein the attribute information of the object comprises one or more of occlusion information of the object, a heading angle of the object, and category information of the object.

**17.** The apparatus according to claim 15 or 16, wherein the first determining unit is specifically configured to:

determine a center location of extracted feature points based on the attribute information of the object; and determine the extraction model based on the center location of the extracted feature points.

**18.** The apparatus according to claim 17, wherein the occlusion information of the object comprises an occlusion proportion of the object and occluded region information of the object; and
the first determining unit is specifically configured to:

obtain an initial center location of the extracted feature points;
determine, based on a correspondence between an occlusion proportion and an adjustment distance, an adjustment distance corresponding to the occlusion proportion of the object; and
determine the center location of the extracted feature points based on the initial center location of the extracted feature points, the adjustment distance corresponding to the occlusion proportion of the object, and an opposite direction of a direction corresponding to the occluded region information.

**19.** The apparatus according to claim 17, wherein the first determining unit is specifically configured to:

obtain an initial center location of the extracted feature points;
determine a feature region of the object based on the heading angle of the object, wherein the feature region is a region, other than a background region, that matches preset feature information; and
determine the center location of the extracted feature points based on the initial center location of the extracted feature points, a preset adjustment distance, and a direction of a center of the feature region.

**20.** The apparatus according to claim 15 or 16, wherein the first determining unit is specifically configured to:

determine, based on the attribute information of the object, a density of extracted feature points distributed in each region of the detection region of the object; and
determine the extraction model based on the density of extracted feature points distributed in each region of the detection region of the object.

**21.** The apparatus according to claim 20, wherein the first determining unit is specifically configured to:

obtain an initial density of extracted feature points distributed in each region of the detection region of the object;
determine, based on a correspondence between category information and an adjustment parameter, a first adjustment parameter corresponding to the category information of the object; and
determine the density of extracted feature points distributed in each region of the detection region of the object based on the initial density of extracted feature points distributed in each region of the detection region of the object and the first adjustment parameter corresponding to the category information of the object.

**22.** The apparatus according to claim 15 or 16, wherein the first determining unit is specifically configured to:

determine, based on the attribute information of the object, a quantity of extracted feature points distributed in each region of the detection region of the object; and
determine the extraction model based on the quantity of extracted feature points distributed in each region of the detection region of the object.

**23.** The apparatus according to claim 22, wherein the first determining unit is specifically configured to:

obtain an initial quantity of extracted feature points distributed in each region of the detection region of the object;
determine, based on a correspondence between category information and an adjustment parameter, a second adjustment parameter corresponding to the category information of the object; and
determine the quantity of extracted feature points distributed in each region of the detection region of the object based on the initial quantity of extracted feature points distributed in each region of the detection region of the object and the second adjustment parameter corresponding to the category information of the object.

24. The apparatus according to any one of claims 15 to 23, wherein the third determining unit is specifically configured to:

perform forward estimation on all feature points in the first feature point set based on a pyramid optical flow algorithm, and determine, in the second image, a feature point corresponding to each feature point in the first feature point set, to obtain a third feature point set;
perform backward estimation on all feature points in the third feature point set based on the pyramid optical flow algorithm, and determine, in the first image, a feature point corresponding to each feature point in the third feature point set, to obtain a fourth feature point set; and
determine the second feature point set based on the first feature point set, the third feature point set, and the fourth feature point set.

25. The apparatus according to claim 24, wherein the third determining unit is specifically configured to:

determine a distance between each feature point in the first feature point set and a corresponding feature point in the fourth feature point set; and
remove, from the third feature point set, a corresponding feature point for which the distance is greater than a preset threshold, to obtain the second feature point set.

26. The apparatus according to claim 25, wherein the fourth determining unit is specifically configured to:

determine, based on a mapping relationship between a distance and a weight, a weight to which a distance corresponding to each feature point in the second feature point set is mapped; and
determine the location region of the object in the second image based on the weight to which the distance corresponding to each feature point in the second feature point set is mapped and the detection region of the object in the first image.

27. The apparatus according to claim 26, wherein the fourth determining unit is specifically configured to:

determine a center location of the object in the second image based on a location of each feature point in the second feature point set and a corresponding weight;
determine a size and a shape of the detection region; and
determine the location region of the object in the second image based on the center location of the object in the second image and the size and the shape of the detection region.

28. The apparatus according to any one of claims 15 to 27, wherein the detection unit is specifically configured to:
input the first image to a preset object detection model to obtain a detection result, wherein the detection result comprises the detection region of the object and the attribute information of the object.

29. A computer device, comprising a processor and a memory, wherein the processor and the memory are connected to each other, the memory is configured to store a computer program, the computer program comprises program instructions, and the processor is configured to invoke the program instructions to perform the method according to any one of claims 1 to 14.

30. A computer-readable storage medium, wherein the computer-readable storage medium stores a computer program, the computer program comprises program instructions, and when the program instructions are executed by a processor, the processor is enabled to perform the method according to any one of claims 1 to 14.

Iterative LK optical flow method

Iterative LK optical flow method

$I_{t-1}$

$I_t$

FIG. 1

Cloud

Intelligent
vehicle 20

Object tracking
apparatus 201

Collection
apparatus 202

FIG. 2

Detect an object in a first image to obtain a detection region of the object and attribute information of the object — 301

Determine an extraction model based on the attribute information of the object — 302

Determine a first feature point set based on the extraction model — 303

Determine a second feature point set of the object in a second image based on the first feature point set — 304

Determine a location region of the object in the second image based on the second feature point set — 305

FIG. 3

FIG. 4a

FIG. 4b

FIG. 5

First feature point set

Distance

Fourth feature point set

Third feature point set

First image

Second image

FIG. 6a

FIG. 6b

20%

FIG. 7a

FIG. 7b

FIG. 8a

FIG. 8b

FIG. 8c

FIG. 8d

FIG. 9

FIG. 10

| | INTERNATIONAL SEARCH REPORT | International application No. |
|---|---|---|
| | | **PCT/CN2021/116173** |

**A. CLASSIFICATION OF SUBJECT MATTER**

G06T 7/246(2017.01)i

According to International Patent Classification (IPC) or to both national classification and IPC

**B. FIELDS SEARCHED**

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

USTXTC; VEN; CNABS; WPABSC; CNTXT; EPTXT; WOTXT; CNKI; IEEE: 目标, 跟踪, 追踪, 检测, 属性, 遮挡, 模型, 网络, 高斯, 拉普拉斯, 特征点, 关键点, 帧, 光流, target, object, track, detect, attribute, shield, model, network, gauss, laplacian, feature point, keypoint, frame, optic flow

**C. DOCUMENTS CONSIDERED TO BE RELEVANT**

| Category* | Citation of document, with indication, where appropriate, of the relevant passages | Relevant to claim No. |
|---|---|---|
| X | CN 111047626 A (SHENZHEN INTELLIFUSION TECHNOLOGIES CO., LTD.) 21 April 2020 (2020-04-21) description paragraphs 54-151 | 1-30 |
| X | CN 111382784 A (MILESIGHT TECHNOLOGY CO., LTD.) 07 July 2020 (2020-07-07) description, paragraphs 13-28 | 1-3, 8-17, 22-30 |
| A | CN 108920997 A (MUNICATION BRANCH, STATE GRID ZHEJIANG ELECTRIC POWER CO., LTD.) 30 November 2018 (2018-11-30) entire document | 1-30 |
| A | CN 102800106 A (LIU, Yiguang) 28 November 2012 (2012-11-28) entire document | 1-30 |
| A | CN 104156976 A (HARBIN DIANSHI SIMULATION TECHNOLOGY CO., LTD.) 19 November 2014 (2014-11-19) entire document | 1-30 |
| A | CN 109118514 A (XIDIAN UNIVERSITY) 01 January 2019 (2019-01-01) entire document | 1-30 |

☑ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 November 2021** | **29 November 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2021/116173**

**C.    DOCUMENTS CONSIDERED TO BE RELEVANT**

| Category* | Citation of document, with indication, where appropriate, of the relevant passages | Relevant to claim No. |
|---|---|---|
| A | CN 104424638 A (SHENZHEN AN-XIN DIGITAL DEVELOPMENT CO., LTD.) 18 March 2015 (2015-03-18)<br>    entire document | 1-30 |
| A | US 2020128183 A1 (SONY CORPORATION) 23 April 2020 (2020-04-23)<br>    entire document | 1-30 |
| A | 王燕妮 等 (WANG, Yanni et al.). "高斯粒子滤波的局部光流运动匹配跟踪算法 (A Local Optical Flow Moving Match Tracking Algorithm Based on Gauss Particle Filter)"<br>探测与控制学报 *(Journal of Detection & Control),*<br>Vol. 39, No. 1, 28 February 2017 (2017-02-28),<br>ISSN: 1008-1194,<br>    pp. 88-92 | 1-30 |

Form PCT/ISA/210 (second sheet) (January 2015)

INTERNATIONAL SEARCH REPORT
Information on patent family members

International application No.

**PCT/CN2021/116173**

| Patent document cited in search report | | | Publication date (day/month/year) | Patent family member(s) | | | Publication date (day/month/year) |
|---|---|---|---|---|---|---|---|
| CN | 111047626 | A | 21 April 2020 | None | | | |
| CN | 111382784 | A | 07 July 2020 | None | | | |
| CN | 108920997 | A | 30 November 2018 | None | | | |
| CN | 102800106 | A | 28 November 2012 | None | | | |
| CN | 104156976 | A | 19 November 2014 | None | | | |
| CN | 109118514 | A | 01 January 2019 | None | | | |
| CN | 104424638 | A | 18 March 2015 | None | | | |
| US | 2020128183 | A1 | 23 April 2020 | US | 10708501 | B2 | 07 July 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010949864